Europäisches Patentamt

European Patent Office

Office européen des brevets

(19)

(11) Veröffentlichungsnummer : **0 366 817 B1**

## (12) EUROPÄISCHE PATENTSCHRIFT

(45) Veröffentlichungstag der Patentschrift :
**05.02.92 Patentblatt 92/06**

(51) Int. Cl.⁵ : **G01K 3/00, H03K 17/08**

(21) Anmeldenummer : **88118189.5**

(22) Anmeldetag : **02.11.88**

(54) **Überwachungsvorrichtung zur Temperaturüberwachung in einer Schaltanordnung.**

(43) Veröffentlichungstag der Anmeldung :
**09.05.90 Patentblatt 90/19**

(45) Bekanntmachung des Hinweises auf die
Patenterteilung :
**05.02.92 Patentblatt 92/06**

(84) Benannte Vertragsstaaten :
**DE FR GB NL**

(56) Entgegenhaltungen :
**DE-A- 1 948 517**
**DE-C- 3 324 925**

(73) Patentinhaber : **Drägerwerk**
**Aktiengesellschaft**
**Moislinger Allee 53-55**
**W-2400 Lübeck 1 (DE)**

(72) Erfinder : **Sürig, Andreas**
**Parchamstrasse 2**
**W-2400 Lübeck 1 (DE)**

EP 0 366 817 B1

Jouve, 18, rue Saint-Denis, 75001 PARIS

## Beschreibung

Die Erfindung betrifft eine Vorrichtung zur Temperaturüberwachung in einer Schaltungsanordnung nach dem Oberbegriff des Anspruchs 1.

Eine derartige Schaltungsanordnung kann allgemein für fluidische, elektrische oder pneumatische Schaltungszwecke eingesetzt werden. Insbesondere ist bei einer elektrischen Überwachungsvorrichtung nach der DE-OS 2532081 eine Schaltungsanordnung vorgesehen, bei welcher beispielsweise eine Stromschiene gegen unerwünschte Erwärmung infolge erhöhter Stromabgabe geschützt werden soll. Zu diesem Zweck ist an die Stromschiene ein Temperaturfühler in Form eines Bimetallschalters von außen anbringbar. Der Bimetallschalter ist in den Sekundärkreis eines Transformators geschaltet, dessen Primärkreis an eine Spannungsquelle angeschlossen ist. Parallel zu dem Bimetallschaltkreis ist als Überwachungseinrichtung ein Relais angeschlossen, welches bei vorliegender Spannung angezogen ist und durch die geschlossenen Arbeitskontakte die Stromversorgung für die zu überwachende Stromschiene aufrecht erhält. Wenn im Fehlerfalle die Stromschiene wegen zu hohen Stromflusses einen so hohen Temperaturwert erreicht, daß der Bimetallschalter die Sekundärseite seines zugehörigen Transformators kurzschließt, fällt die Spannung an der Primärseite ab, das Relais öffnet, und die Stromversorgung für die Stromschiene wird unterbrochen.

Bei der bekannten Schaltungsanordnung dient die Relaisschaltung als Stellglied für das Ein- bzw. Ausschalten der zugehörigen Stellgröße, nämlich der Stromversorgung durch die zu überwachende Stromschiene. Die Überwachungseinrichtung, nämlich die an eine Stromquelle angeschlossene Relaisschaltung und parallel zu ihr der Bimetallschalter mit zugehörigem Transformator, ist über den Bimetallschalter in Wirkverbindung mit dem zu überwachenden Schaltungselement, nämlich der Stromschiene, gebracht.

Die Verwendung von Bimetallschaltern begrenzt durch deren Schalthysterese die Ansprechgenauigkeit der Überwachungsvorrichtung. Die voluminöse Bauform der Schalter macht ihren Einsatz in kleinsten elektronischen Schaltkreisen unmöglich.

Der alternative Einsatz von thermischen Sicherungen, wie sie in Deutscher Norm : DIN 57631, Dezember 1983, und in der Internationalen Norm : IEC-691, 1. Ausgabe 1980, festgelegt sind, in elektrischen Schaltkreisen besitzt ähnliche Nachteile : Die Ansprechzeiten belaufen sich auf mehrere Sekunden (bis etwa 15 s), die Ansprechtemperatur ist nur begrenzt in Abstufungen auswählbar, ihre Funktionssicherheit ist mit vertretbarem Aufwand nicht überprüfbar und ihr Ausschaltverhalten ist von ihrer thermischen Vorgeschichte abhängig.

All diese Nachteile erschweren den Einsatz in schnell zu schaltenden elektronischen Schaltkreisen, insbesondere ist die genau einzuhaltende, reproduzierbare Schalttemperatur für eigensichere Schaltkreise, die in explosionsgefährdeter Umgebungsatmosphäre eingesetzt werden sollen, nicht gewährleistet.

Der vorliegenden Erfindung liegt die Aufgabe zugrunde, eine Überwachungsvorrichtung der genannten Art so zu verbessern, daß insbesondere für ihre Verwendung in eigensicheren elektronischen Schaltkreisen sowohl eine möglichst kleinvolumige Bauform als auch eine zuverlässige, in engen Temperaturbereichen auswählbare Schalteigenschaft verwirklicht werden kann. Die Überprüfung ihrer Funktionsfähigkeit soll durch einfache Mittel in eingebautem Zustand möglich sein.

Die Lösung der Aufgabe erfolgt mit den im kennzeichnenden Teil des Anspruchs 1 angegebenen Merkmalen.

Der Vorteil der Erfindung liegt im wesentlichen darin, daß die Überwachung der Schaltungselemente so erfolgen kann, daß bei Ausfall des einen das andere noch intakte Schaltungselement als Stellglied den Stromkreis in der Weise beeinflußt, daß die schädigende oder beeinträchtigende Wirkung auf das ausgefallene Schaltungselement, z.B. seine erhöhte Temperatur, beseitigt wird. Der Stromkreis kann somit auch bei gefahrerzeugendem Ausfall des einen Schaltungselementes in einen sicheren Arbeits- oder Ruhezustand gebracht werden.

Eine solche Überwachungsvorrichtung ist besonders bei eigensicheren Schaltungen einsetzbar, bei denen die Schaltungselemente redundant eingesetzt werden. Die Schaltungselemente können sich dann gegenseitig überwachen, und bei erhöhter Temperatur des einen wirkt das andere als Stellglied und beschaltet den Stromkreis.

Es erweist sich als günstig, für den Fall der Temperaturüberwachung die Temperaturfühler als temperaturabhängige Widerstandselemente auszubilden. Die Wahl von Heißleiterwiderständen (NTC) ist besonders zweckmäßig, da diese in hoher Empfindlichkeit und besonders kleiner Bauform für einen Temperaturbereich von − 55°C bis + 350°C zur Verfügung stehen und die Nachteile der bekannten Thermosicherungen bzw. Bimetallschalter vermieden werden können.

Ein besonders zweckmäßiger Aufbau der Schaltungsanordnung ist dadurch gegeben, daß bei Transistoren als Stellglieder ihnen als Überwachungseinrichtung jeweils ein Komparator zugeordnet ist, der an eine eigene Brückenschaltung angeschlossen ist, welche durch den veränderlichen, temperaturabhängigen Widerstand des Temperaturfühlers im Fehlerfalle verstimmt wird, so daß ein resultierendes Fehlersignal von dem defekten Stellglied zu einer Schaltung des unbeschädigten Stellgliedes führt. Die Wahl einer Brückenschaltung ist sinnvoll, da dadurch die Temperaturmessung ratiometrisch erfolgt und Schalttemperatur und -hysterese durch geeignete Wahl von Bauelementen in einem weiten Bereich frei gewählt werden können.

Auf diese Weise erhält man eine schnelle Schaltungsanordnung, wie sie beispielsweise in Transistorschaltungen erforderlich ist, um ein sicheres Abschalten eines damit betriebenen Gerätes im Fehlerfalle zu ermöglichen.

Mit der Erfindung wird eine Überwachungsvorrichtung angegeben, mit der in zuverlässiger Weise eigensichere elektrische Schaltkreise aufgebaut werden können.

Ein Ausführungsbeispiel der Erfindung ist in einer schematischen Zeichnung dargestellt und wird im folgenden näher erläutert.

Es zeigen :

Fig. 1        ein Blockschaltbild mit in Reihe geschalteten Transistoren als Schaltungselementen,
Fig. 2        ein Blockschaltbild mit parallel geschalteten Transistoren.

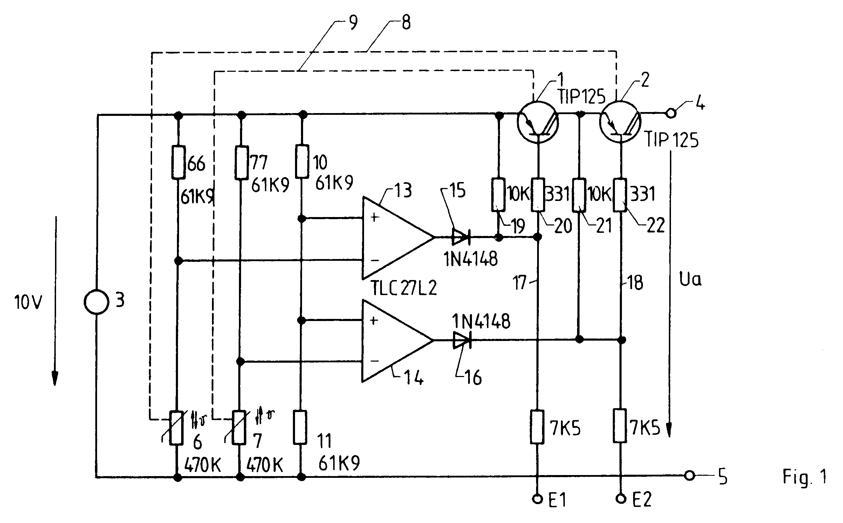

In Figur 1 ist ein elektrischer Transistorschaltkreis gezeigt, welcher zwei Transistoren (1, 2) enthält, die von einer Spannungsquelle (3) gespeist werden. An den Ausgangsklemmen (4, 5) über dem Kollektor des Transistors (2) und der Spannungsquelle (3) fällt eine Spannung Ua ab. Diese dient zur Versorgung eines nicht dargestellten Verbrauchers. Die Transistoren (1, 2) sind thermisch mit zugehörigen NTC-Widerständen (6, 7) verbunden. Diese thermische Verbindung ist durch die gestrichelten Linien (8, 9) dargestellt. Räumlich sind die NTC-Widerstände (6, 7) mit den Transistoren (1, 2) verbunden, schaltungsmäßig bilden sie den variablen Zweig einer Widerstandsbrücke, welche jeweils aus den Widerständen (10, 11, 6, 66) einerseits und (10, 11, 7, 77) andererseits gebildet sind. Dabei ist der feste Zweig mit den Brückenwiderständen (10, 11) an die nichtinvertierenden Eingänge zweier Komparatoren (13, 14), und die Mittenabgriffe des variablen Zweiges der Widerstandsbrücke (6, 66) an den einen Komparator (13) und des variablen Zweiges (7, 77) an den anderen Komparator (14) angeschlossen. Beide Ausgänge der Komparatoren (13, 14) sind jeweils mit einer Diode (15, 16) versehen und an die Basisleitungen (17, 18) der Transistoren (1, 2) angeschlossen. Diese Basisleitungen (17, 18) werden über Steuereingänge (E1, E2) angeschlossen. Die Widerstände und Dioden sind übliche Bauteile, deren elektrische Werte in der Figur angegeben sind.

Im Fehlerfall sei angenommen, daß der Transistor (1) infolge eines Defektes zu heiß wird, so daß der mit ihm thermisch verbundene NTC-Widerstand (7) den Spannungsteiler (7, 77) verstimmt.

Gilt R7/R77 < R11/R10, schaltet die Ausgangsspannung des zugeordneten Komparators (14) auf positives Potential, die Diode (16) wird leitend und sperrt über die Leitung (18) den noch intakten Transistor (2). Dadurch wird der Stromfluß über die Ausgangsklemmen (4, 5) und den defekten Transistor (1) unterbrochen.

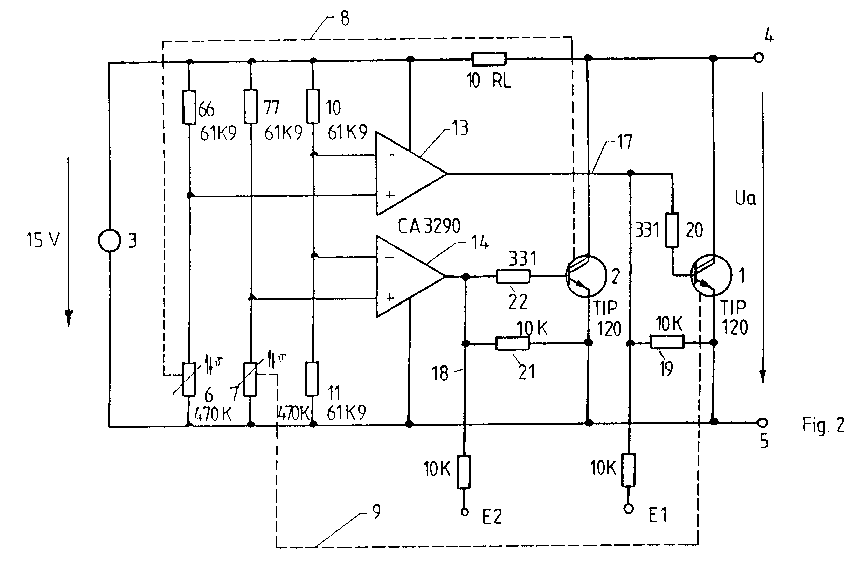

In Figur 2 ist ein dem Blockschaltbild nach Figur 1 ähnliches Schaltbild gezeigt, in welchem die sich wiederholenden Bauteile mit gleichen Bezugsziffern versehen sind. Die beiden Transistoren (1, 2) sind parallel zur Spannungsquelle (3) und zu den Ausgangsklemmen (4, 5) geschaltet. Im normalen Betrieb steuern die Transistoren (1, 2) den Stromkreis derart, daß der Spannungsabfall Ua über den Ausgangsklemmen (4, 5) den erforderlichen Wert erhält. Sollte im Fehlerfall beispielsweise der Transistor (1) hochohmig werden und eine unerwünschte Temperatur annehmen, wird dies über das Widerstandelement (7) an den Transistor (2) gemeldet, der daraufhin die Ausgangsklemmen (4, 5) kurzschließt. Die gesamte Leistung wird dann in einem Lastwiderstand (RL) verbraucht, der in einer kurzschlußfesten Ausführung gewählt ist. Durch den geschalteten Kurzschluß über Transistor (2) wird die weitere Erwärmung des Transistors (1) verhindert, und er kühlt ab.

In beiden Schaltungsarten nach Figur 1 und Figur 2 werden Steuersignale zum Ansteuern der Transistoren (1, 2) über die Eingabeanschlüsse (E1, E2) an die Basis der Transistoren (1, 2) gegeben. Dadurch kann die Ausgangsspannung Ua in gewünschter Weise beeinflußt werden. Die Widerstände (19, 20, 21, 22) begrenzen die über die Leitungen (17, 18) in die Halbleiter (1, 2, 13, 14, 15, 16) einspeisbare elektrische Leistung auf thermisch unkritische Werte.

**Patentansprüche**

1. Vorrichtung zur Temperaturüberwachung eines Schaltungselementes (1, 2) in einer Schaltungsanordnung, bei der über einen Temperaturfühler (6, 7) bei Überschreitung eines vorgegebenen Wertes der Stromkreis zur Vermeidung unerwünscht hoher Temperaturen beeinflußbar ist, dadurch gekennzeichnet, daß die Schaltungselemente (1, 2) mehrfach in Reihe oder parallel geschaltet sind und der jeweilige das eine Schaltungselement (1 ; 2) überwachende Temperaturfühler (7 ; 6) mit dem entsprechend anderen, bzw. nöchsten als Stellglied zur Beeinflussung des Stromkreises wirkenden Schaltelement (2 ; 1) in Verbindung gebracht ist.

2. Vorrichtung nach Anspruch 1, dadurch gekennzeichnet, daß der Temperaturfühler ein temperaturabhängiges Widerstandselement (6, 7) ist.

3. Vorrichtung nach einem der Ansprüche 1 oder 2, dadurch gekennzeichnet, daß bei einer Transistorschaltungsanordnung als Stellglieder Transistoren (1, 2) vorgesehen sind, denen jeweils ein Komparator (13, 14) zugeordnet ist, über die mit dem in einer eigenen Widerstandsbrücke als veränderlicher Widerstand eingebauten Temperaturfühler (6, 7) die Transistoren (1, 2) zur Beeinflussung des Stromes ansteuerbar sind.

## Claims

1. Device for monitoring the temperature of a circuit element (1, 2) in a circuit arrangement, in which by means of a temperature sensor (6, 7) on exceeding a specified value the circuit can be influenced for the avoidance of undesirably high temperatures, characterized in that the circuit elements (1, 2) are connected repeatedly in series or in parallel and the respective temperature sensor (7 ; 6) monitoring one of the circuit elements (1 ; 2) is brought into connection with the correspondingly other, or highest, circuit element (2 ; 1) acting as adjusting element to influence the circuit.

2. Device according to claim 1, characterized in that the temperature sensor is a temperature-dependent resistance element (6, 7).

3. Device according to one of claims 1 or 2, characterized in that in a transistor circuit arrangement transistors (1, 2) are provided as adjusting elements, a comparator (13, 14) being associated with each of the transistors, by means of which comparators, with the temperature sensor (6, 7) installed in a specific resistance bridge as variable resistance, the transistors (1, 2) can be controlled to influence the current.

## Revendications

1. Dispositif de surveillance de la température d'un élément de commutation (1, 2) disposé dans un circuit, dans lequel le circuit électrique est susceptible d'être influencé par l'intermédiaire d'un capteur de température (6, 7), en cas de dépassement d'une valeur prédéterminée, en vue d'éviter des températures élevées indésirables, caractérisé en ce que les éléments de commutation (1, 2) sont multiples et mis en circuit en série ou en parallèle, et le premier capteur de température (7 ; 6) qui surveille l'élément de commutation (1, 2) associé étant relié au second, respectivement au prochain élément de commutation (2, 1) correspondant, qui agit comme organe de réglage, en vue d'influencer le circuit électrique.

2. Dispositif selon la revendication 1, caractérisé en ce que le capteur de température est un élément résistant (6, 7) sensible à la température.

3. Dispositif selon l'une des revendications 1 ou 2, caractérisé en ce que, dans le cas d'un circuit à transistor, on prévoit comme organes de réglage des transistors (1, 2), auxquels on associe chaque fois un comparateur (13, 14), par l'intermédiaire desquels on peut commander les transistors (1, 2) pour régler l'intensité, à l'aide du capteur de mesure (6, 7) qui est intégré, à titre de résistance variable, dans un pont de résistances propre.

Fig. 1

Fig. 2

EP 0 366 817 B1